# FASCICULE DE BREVET EUROPEEN

(11) **EP 3 219 571 B1**
(45) Date de publication et mention de la délivrance du brevet: **22.08.2018**
(21) Numéro de dépôt: 17160678.3
(22) Date de dépôt: 13.03.2017
(51) Int. Cl.: B61H 5/00, F16D 55/224, F16D 65/847, F16D 65/18, B60T 5/00

(54) **BOGIE DE VEHICULE FERROVIAIRE COMPRENANT UN SYSTEME DE FREINAGE ET VEHICULE FERROVIAIRE ASSOCIE**
SCHIENENFAHRZEUGDREHGESTELL, DAS EIN BREMSSYSTEM UMFASST, UND ENTSPRECHENDES SCHIENENFAHRZEUG
RAILWAY VEHICLE BOGIE COMPRISING A BRAKING SYSTEM AND ASSOCIATED RAILWAY VEHICLE

(30) Priorité: 15.03.2016 FR 1652179
(43) Date de publication de la demande: 20.09.2017
(73) Titulaire: ALSTOM Transport Technologies, 93400 Saint-Ouen (FR)
(72) Inventeur: RODET, Alain, 71100 Chalon sur Saône (FR); BENOTMANE, Mustapha, 71210 Montchanin (FR)
(74) Mandataire: Lavoix

(56) Documents cités:
- EP-A1- 2 676 859
- FR-A- 1 234 516
- FR-A- 1 544 308

## Description

La présente invention concerne un bogie de véhicule ferroviaire comprenant :
- deux paires de roues, les roues de chaque paire étant reliées l'une à l'autre par une structure d'essieu respective, les structures d'essieu définissant un espace interne,
- un châssis, chaque structure d'essieu étant portée par le châssis, et
- un système de freinage.

Actuellement, le dispositif de freinage, notamment pour les trains à grande vitesse, nécessitant une grande puissance de freinage, consiste à placer une pluralité de disques de freinage sur la structure d'essieu entre les roues.

Cela permet notamment d'assurer les performances requises pour le freinage d'un train à grande vitesse.

FR 1 544 308 A décrit un système de freinage à disques comprenant un ensemble de disques et un système de frein comprenant des sabots de frein attaquant l'ensemble de disques.

FR 1 234 516 A décrit un dispositif de freinage comprenant un frein pilote destiné à agir sur le pourtour de roue et un frein principal apte à agir sur la roue ou un disque qui y est fixé.

Les roues de véhicule ferroviaire de ce type ont habituellement un diamètre environ égal à 920 mm et les disques un diamètre de 640 mm. Ainsi l'encombrement minimal en hauteur au droit de la structure d'essieu comprenant les disques est supérieur à 780 mm.

En ajoutant les jeux nécessaires et les débattements de suspension, l'encombrement minimal en hauteur du bogie est généralement supérieur à 1 000 mm, et souvent supérieur à 1 100 mm. Le plancher de caisse du véhicule ferroviaire en circulation est alors à une hauteur au sol d'au moins 1 200 mm.

Cependant, une telle hauteur nécessite généralement la présence d'une pluralité de marches entre le plancher de caisse et le quai en station, installées sur le véhicule ferroviaire, afin de permettre l'accès du véhicule depuis le quai.

De telles marches sont gênantes notamment pour l'accès des personnes à mobilité réduite et d'objets encombrants.

Un but de l'invention est donc de faciliter l'accès par un utilisateur au véhicule ferroviaire, tout en maintenant les performances de freinage requises.

A cet effet, l'invention a notamment pour objet un bogie de véhicule ferroviaire du type précité, dans lequel le système de freinage comprend un dispositif de freinage monté sur chaque roue et un dispositif de freinage monté à l'extérieur de chaque roue, l'extérieur d'une roue étant défini comme l'espace à l'opposé de l'espace interne.

Le système de freinage est placé au niveau des roues et de l'extérieur des roues, et non entre les roues. L'encombrement minimal en hauteur au droit de la structure d'essieu est donc réduit. Cela permet notamment de diminuer l'encombrement général en hauteur du bogie et d'abaisser en conséquence la caisse de la voiture. Un véhicule ferroviaire comprenant ce bogie peut donc avoir un plancher bas, facilitant l'accès à une voiture portée par ce bogie.

Un bogie selon l'invention peut comporter en outre l'une ou plusieurs des caractéristiques suivantes, prises seules ou selon toutes les combinaisons techniquement possibles :
- la structure d'essieu est dépourvue de disque de freinage entre les deux roues,
- le dispositif de freinage monté sur chaque roue comprend une pince de freinage agissant sur la roue,
- le dispositif de freinage monté à l'extérieur de chaque roue comprend un disque et une pince de freinage agissant sur le disque,
- le disque du dispositif de freinage monté à l'extérieur de chaque roue est relié à la roue associée par une liaison rigide, le disque et la roue étant solidaire en rotation,
- la liaison rigide est formée d'une partie de la structure d'essieu,
- chaque structure d'essieu est reliée au châssis par l'intermédiaire d'un dispositif de suspension primaire, le dispositif de suspension primaire étant monté sur la structure d'essieu entre les roues,
- chaque dispositif de suspension primaire comprend une barre de torsion transversale, et
- chaque dispositif de suspension primaire comprend au moins un organe de liaison à la structure d'essieu correspondante et un organe de liaison au châssis.

L'invention concerne également un véhicule ferroviaire comprenant au moins une voiture et au moins un bogie tel que décrit précédemment, le bogie portant la voiture.

L'invention sera mieux comprise à la lecture de la description qui va suivre, donnée uniquement à titre d'exemple et faite en se référant aux figures annexées parmi lesquelles :
- la figure 1 est une vue en perspective d'un bogie de véhicule ferroviaire selon un exemple de mode de réalisation de l'invention ; et
- la figure 2 est une vue de haut du bogie de la figure 1.

Dans la description, les termes « vertical » et « horizontal » sont définis par rapport à un bogie monté dans un véhicule ferroviaire et disposé sur des rails. Ainsi, un plan horizontal est sensiblement parallèle au plan dans lequel s'étendent les essieux et le plan vertical est sensiblement parallèle au plan dans lequel s'étendent les roues. Le terme « longitudinal » est défini par rapport à la direction dans laquelle s'étend un véhicule ferroviaire dans un plan horizontal et le terme « transversal » est défini selon une direction sensiblement perpendiculaire à la direction longitudinale dans un plan horizontal.

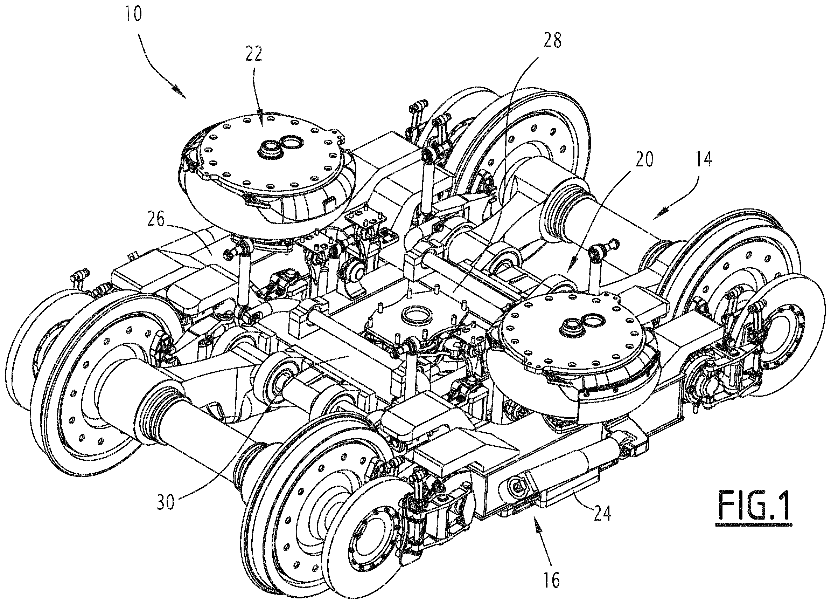

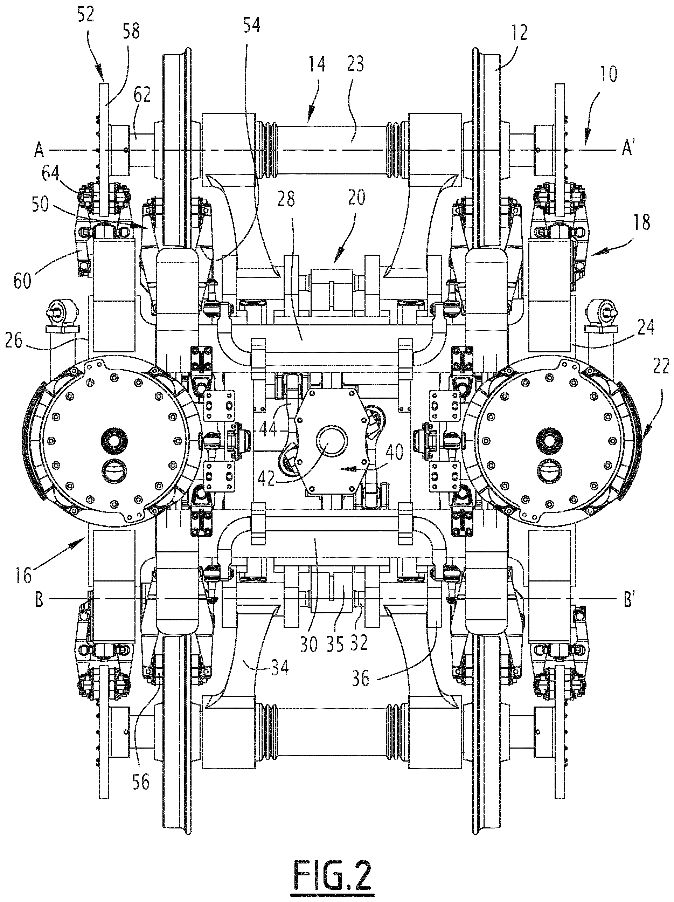

En référence aux figures 1 et 2, on décrit un bogie 10 de véhicule ferroviaire (non représenté), par exemple un train à grande vitesse.

Le bogie est destiné à être raccordé de façon connue à au moins une voiture (non représenté) du véhicule ferroviaire.

Le bogie 10 comprend deux paires de roues 12, deux structures d'essieu 14, un châssis 16 et un système de freinage 18.

Le bogie 10 comprend, en outre, deux dispositifs de suspension primaire 20 et un dispositif de suspension secondaire 22.

Les roues d'une paire 12 sont reliées l'une à l'autre par une des structures d'essieu 14 qui comprend un arbre reliant les roues, pour former un essieu.

Chaque structure d'essieu comprend, par exemple, une protection 23 entourant l'arbre entre les deux roues de la paire 12.

L'essieu s'étend selon un axe transversal A-A'.

Les quatre roues définissent un espace interne, c'est-à-dire un espace compris dans le polygone ayant pour sommets les quatre roues.

Les deux essieux sont reliés l'un à l'autre par le châssis 16. Les essieux sont articulés au châssis 16 autour d'un axe sensiblement parallèle à l'axe des essieux.

Chaque structure d'essieu 14 est portée par le châssis 16, l'arbre étant mobile en rotation par rapport au châssis 16.

Le châssis 16 comprend, par exemple, deux longerons 24, 26, s'étendant sensiblement longitudinalement, et deux traverses 28, 30, s'étendant sensiblement transversalement.

Le châssis 16 comprend en outre un dispositif de liaison 40 relié en son centre à la voiture du véhicule ferroviaire par un pivot de caisse 42. Le dispositif de liaison 40 comprend également deux bielles 44 reliées par une de leurs extrémités au pivot de caisse 42 et articulées au pivot de caisse autour d'un axe sensiblement vertical. Chaque bielle 44 est reliée par son autre extrémité à une traverse différente du châssis 16. Le dispositif de liaison 40, qui présente sensiblement la forme d'un Z vu du dessus, comme représenté sur la Fig. 2, permet de distribuer le mouvement de la caisse dans les deux bielles 44. Cela permet notamment aux bogies de pivoter indépendamment de la caisse, donc des autres bogies supportant la caisse.

Chaque dispositif de suspension primaire 20 relie un essieu au châssis 16. Plus particulièrement, chaque dispositif de suspension primaire 20 relie une structure d'essieu 14 à une traverse 28, 30 du châssis 16.

Chaque dispositif de suspension primaire 20 est monté sur la structure d'essieu 14 entre les roues 12.

Chaque dispositif de suspension primaire 20 comprend une barre de torsion transversale 32 et au moins un organe de liaison à l'essieu 34 et un organe de liaison au châssis 35.

Chaque traverse 28, 30 du châssis 16 comprend ici des flancs 36.

Les flancs 36 d'une même traverse 28, 30 délimitent des ouvertures alignées selon un axe transversal B-B'. L'axe transversal B-B' des ouvertures est compris entre la traverse et l'axe A-A' de l'essieu auquel la traverse est reliée.

La barre de torsion transversale 32 s'étend selon l'axe transversal B-B'. La barre de torsion transversale 32 s'étend notamment dans les ouvertures délimitées par les flancs 36.

L'organe de liaison 34 relie l'essieu et la barre de torsion transversale 32 correspondante.

L'organe de liaison 35 relie le châssis et la barre de torsion transversale 32 correspondante

L'organe de liaison 34 à l'essieu entoure la barre de torsion transversale 32 entre des flancs 36.

L'organe de liaison 34 à l'essieu s'étend sensiblement longitudinalement et non à la verticale. Cela permet notamment de diminuer l'encombrement général en hauteur du bogie.

Dans le mode de réalisation représenté, chaque dispositif de suspension primaire 20 comprend deux organes de liaison 34, un organe de liaison 34 étant relié d'une part à la structure d'essieu à proximité de chaque roue et d'autre part s'étend entre deux flancs 36.

Les dispositifs de suspension primaire 20 sont aptes à reprendre les efforts entre les essieux et le châssis selon toutes les directions, notamment les gauches de voie.

Le système de freinage 18 comprend un dispositif de freinage 50 monté sur chaque roue 12 et un dispositif de freinage 52 monté à l'extérieur de chaque roue 12. L'extérieur d'une roue 12 est défini comme l'espace à l'opposé de l'espace interne.

Chaque dispositif de freinage 50 monté sur une roue 12 comprend une pince de freinage 54 agissant sur la roue.

La pince de freinage 54 présente deux plaquettes 56 aptes à venir frotter de chaque côté de la roue 12. Les frottements ainsi obtenus entraînent un ralentissement de la roue et donc un freinage du véhicule.

Les plaquettes 56 sont maintenues dans un étrier, l'étrier étant fixe et seules les plaquettes 56 se déplaçant afin d'entrer en friction avec la roue 12, ou une pince apte à se resserrer afin de mettre les plaquettes 56 en contact avec la roue 12 dans une position de freinage.

En dehors de la position de freinage, les plaquettes 56 ne frottent pas contre la roue 12.

Les plaquettes 56 sont réalisées en matériau composite ou matériau fritté.

Chaque dispositif de freinage 52 monté à l'extérieur d'une roue 12 comprend un disque 58 et une pince de freinage 60 agissant sur le disque 58.

Le disque 58 a un diamètre inférieur à celui de la roue 12.

Le disque 58 est en fonte ou acier.

Le disque 58 est relié à la roue associée par une liaison rigide 62, le disque 58 et la roue 12 étant solidaire en rotation autour de l'axe A-A'.

La liaison rigide 62 relie le centre de la roue 12 et le centre du disque 58, la liaison rigide 62 s'étendant selon une direction transversale.

La liaison rigide 62 est ici formée d'une partie de la structure d'essieu 14, c'est-à-dire que la structure d'essieu 14 s'étend entre les dispositifs de freinage 52 monté à l'extérieur de deux roues 12 d'une paire et traverse lesdites roues 12 de la paire.

Pour chaque dispositif de freinage 52 monté à l'extérieur d'une roue, la pince de freinage 60 présente deux plaquettes 64 aptes à entrer en friction avec chaque côté du disque 58 dans une position de freinage.

En dehors de la position de freinage, les plaquettes 64 ne frottent pas contre le disque 58.

Les plaquettes 64 sont, par exemple, réalisées en matériau composite ou matériau fritté.

Les frottements ainsi obtenus entraînent un ralentissement du disque 58, donc de la roue 12 par la liaison rigide 62, et donc un freinage du véhicule.

Les plaquettes 64 sont maintenues dans un étrier, l'étrier étant fixe et seules les plaquettes 64 se déplaçant afin de venir frotter le disque 58, ou une pince apte à se resserrer afin de mettre les plaquettes 64 en contact avec le disque 58.

Chaque structure d'essieu 14 est dépourvue de disque de freinage entre les deux roues 12.

Le dispositif de suspension secondaire 22 comprend deux suspensions secondaires, disposées sur les longerons 24, 26.

La voiture du véhicule est destinée à reposer sur le dispositif de suspension secondaire 22, c'est-à-dire que le dispositif de suspension secondaire est apte à relier le bogie à une voiture de véhicule ferroviaire.

La hauteur maximale au sol du dispositif de suspension secondaire est inférieure à 950 mm.

Les suspensions secondaires permettent d'amortir les mouvements du bogie 10 par rapport à la voiture du véhicule.

Le bogie peut être un bogie motorisé, c'est-à-dire qu'il comprend un moteur (non représenté) apte à entraîner au moins un essieu en rotation, ou non.

La présence d'un dispositif de freinage sur chaque roue et d'un dispositif de freinage à l'extérieur de chaque roue permet un freinage efficace du bogie.

De plus, l'absence de disque de freinage entre les roues associées du bogie entraîne un encombrement vertical limité au droit de la structure d'essieu entre les roues. Cela permet notamment de diminuer l'encombrement général en hauteur du bogie et d'abaisser en conséquence la caisse de la voiture. Cela facilite notamment l'accès à la voiture portée par ce bogie.

En outre, la structure des dispositifs de suspension primaire 20 permet de s'affranchir de l'utilisation de suspensions primaires disposées à la verticale entre le châssis 16 et les structures d'essieu 14. Cela permet également de diminuer l'encombrement général en hauteur du bogie et d'abaisser en conséquence la caisse de la voiture. Plus généralement, chaque dispositif de suspension primaire 20 ne dépasse pas les structures d'essieu ou est globalement à la même hauteur que les structures d'essieu, ce qui offre un encombrement vertical limité au droit de la structure d'essieu entre les roues et permet notamment de faciliter l'accès à la voiture portée par ce bogie.

## Revendications

1. Bogie (10) de véhicule ferroviaire, comprenant :
- deux paires de roues (12), les roues (12) de chaque paire étant reliées l'une à l'autre par une structure d'essieu respective (14) pour former un essieu, les structures d'essieu (14) définissant un espace interne,
- un châssis (16), chaque structure d'essieu (14) étant portée par le châssis (16), et
- un système de freinage (18),
**caractérisé en ce que** le système de freinage (18) comprend un dispositif de freinage (50) monté sur chaque roue (12) et un dispositif de freinage (52) monté à l'extérieur de chaque roue (12), l'extérieur d'une roue étant défini comme l'espace à l'opposé de l'espace interne, chaque essieu étant relié au châssis par l'intermédiaire d'un dispositif de suspension primaire, chaque dispositif de suspension primaire (20) ne dépassant pas des structures d'essieu (14) ou étant globalement à la même hauteur que les structures d'essieu (14).

2. Bogie selon la revendication 1, **caractérisé en ce que** la structure d'essieu (14) est dépourvue de disque de freinage entre les deux roues (12).

3. Bogie selon la revendication 1 ou 2, **caractérisé en ce que** le dispositif de freinage (50) monté sur chaque roue (12) comprend une pince de freinage (54) agissant sur la roue (12).

4. Bogie selon l'une quelconque des revendications 1 à 3, **caractérisé en ce que** le dispositif de freinage (52) monté à l'extérieur de chaque roue (12) comprend un disque (58) et une pince de freinage (60) agissant sur le disque (58).

5. Bogie selon la revendication 4, **caractérisé en ce que** le disque (58) du dispositif de freinage (52) monté à l'extérieur de chaque roue (12) est relié à la roue (12) associée par une liaison rigide (62), le disque (58) et la roue (12) étant solidaire en rotation.

6. Bogie selon la revendication 5, **caractérisé en ce que** la liaison rigide (62) est formée d'une partie de la structure d'essieu (14).

7. Bogie selon l'une quelconque des revendications 1 à 6, **caractérisé en ce que** chaque structure d'essieu (14) est reliée au châssis (16) par l'intermédiaire d'un dispositif de suspension primaire (20), le dispositif de suspension primaire (20) étant monté sur la structure d'essieu (14) entre les roues (12).

8. Bogie selon la revendication 7, **caractérisé en ce que** chaque dispositif de suspension primaire (20) comprend une barre de torsion transversale (32).

9. Bogie selon la revendication 7 ou 8, **caractérisé en ce que** chaque dispositif de suspension primaire (20) comprend au moins un organe (34) de liaison à la structure d'essieu (14) correspondante et un organe (35) de liaison au châssis (16).

10. Véhicule ferroviaire comprenant au moins une voiture et au moins un bogie (10) selon l'une quelconque des revendications 1 à 9, le bogie (10) portant la voiture.

## Patentansprüche

1. Drehgestell (10) für ein Schienenfahrzeug, aufweisend:
- zwei Paar Räder (12), wobei die Räder (12) jedes Paars miteinander verbunden sind durch eine jeweilige Achsenstruktur (14) zum Bilden einer Achse, wobei die Achsenstrukturen (14) einen inneren Raum definieren,
- ein Chassis (16), wobei jede Achsenstruktur (14) von dem Chassis (16) getragen wird, und
- ein Bremssystem (18),
**dadurch gekennzeichnet, dass** das Bremssystem (18) aufweist eine Bremsvorrichtung (50), die an jedem Rad (12) montiert ist, und eine Bremsvorrichtung (52), die am Äußeren jedes Rads (12) montiert ist, wobei das Äußere eines Rads definiert ist als der Raum, der nicht der innere Raum ist, wobei jede Achse mit dem Chassis verbunden ist via die Zwischenschaltung einer primären Federvorrichtung, wobei die primäre Federvorrichtung (20) die Achsenstrukturen (14) nicht überragt oder in ihrer Gesamtheit auf gleicher Höhe wie die Achsenstrukturen (14) ist.

2. Drehgestell gemäß Anspruch 1, **dadurch gekennzeichnet, dass** die Achsenstruktur (14) zwischen den beiden Rädern (12) bremsscheibenfrei ist.

3. Drehgestell gemäß Anspruch 1 oder 2, **dadurch gekennzeichnet, dass** die Bremsvorrichtung (50), die an jedem Rad (12) montiert ist, eine Bremszange (54) aufweist, die auf das Rad (12) wirkt.

4. Drehgestell gemäß irgendeinem der Ansprüche 1 bis 3, **dadurch gekennzeichnet, dass** die Bremsvorrichtung (52), die am Äußeren jedes Rads (12) montiert ist, eine Scheibe (58) und eine Bremszange (60) aufweist, die auf die Scheibe (58) wirkt.

5. Drehgestell gemäß Anspruch 4, **dadurch gekennzeichnet, dass** die Scheibe (58) der Bremsvorrichtung (52), die am Äußeren jedes Rads (12) montiert ist, mit dem zugeordneten Rad (12) verbunden ist durch eine starre Verbindung (62), wobei die Scheibe (58) und das Rad (12) drehfest miteinander verbunden sind.

6. Drehgestell gemäß Anspruch 5, **dadurch gekennzeichnet, dass** die starre Verbindung (62) gebildet ist durch einen Teil der Achsenstruktur (14).

7. Drehgestell gemäß irgendeinem der Ansprüche 1 bis 6, **dadurch gekennzeichnet, dass** jede Achsenstruktur (14) mit dem Chassis (16) verbunden ist via die Zwischenschaltung einer primären Federvorrichtung (20), wobei die primäre Federvorrichtung (20) zwischen den Rädern (12) an der Achsenstruktur (14) montiert ist.

8. Drehgestell gemäß Anspruch 7, **dadurch gekennzeichnet, dass** jede primäre Federvorrichtung (20) eine transversale Torsionsstange (32) aufweist.

9. Drehgestell gemäß Anspruch 7 oder 8, **dadurch gekennzeichnet, dass** jede primäre Federvorrichtung (20) wenigstens ein Organ (34) zur Verbindung mit der korrespondierenden Achsenstruktur (14) und ein Organ (35) zur Verbindung mit dem Chassis (16) aufweist.

10. Schienenfahrzeug mit wenigstens einem Wagen und wenigstens einem Drehgestell (10) gemäß irgendeinem der Ansprüche 1 bis 9, wobei das Drehgestell (10) den Wagen trägt.

## Claims

1. A railway vehicle bogie (10), comprising:
- two pairs of wheels (12), the wheels (12) of each pair being connected to one another by a respective axle structure (14) to form an axle, the axle structures (14) defining an inner space,
- a chassis (16), each axle structure (14) being supported by the chassis (16), and
- a brake system (18),
**characterized in that** the brake system (18) comprises a brake device (50) mounted on each wheel (12) and a brake device (52) mounted outside each wheel (12), the outside of a wheel being defined as the space opposite the inner space, each axle being connected to the chassis via a primary suspension device, each primary suspension device (20) not exceeding axle structures (14) or being globally at the same height as the axle structures (14).

2. The bogie according to claim 1, **characterized in that** the axle structure (14) has no brake disc between the two wheels (12).

3. The bogie according to claim 1 or 2, **characterized in that** the brake device (50) mounted on each wheel (12) comprises a brake clamp (54) acting on the wheel (12).

4. The bogie according to any one of claims 1 to 3, **characterized in that** the brake device (52) mounted outside each wheel (12) comprises a disc (58) and a brake clamp (60) acting on the disc (58).

5. The bogie according to claim 4, **characterized in that** the disc (58) of the brake device (52) mounted outside each wheel (12) is connected to the associated wheel (12) by a rigid link (62), the disc (58) and the wheel (12) being secured in rotation.

6. The bogie according to claim 5, **characterized in that** the rigid link (62) is formed from part of the axle structure (14).

7. The bogie according to any one of claims 1 to 6, **characterized in that** each axle structure (14) is connected to the chassis (16) via a primary suspension device (20), the primary suspension device (20) being mounted on the axle structure (14) between the wheels (12).

8. The bogie according to claim 7, **characterized in that** each primary suspension device (20) comprises a transverse torsion bar (32).

9. The bogie according to claim 7 or 8, **characterized in that** each primary suspension device (20) comprises at least one linking member (34) to the corresponding axle structure (14) and a linking member (35) to the chassis (16).

10. A railway vehicle comprising at least one car and at least one bogie (10) according to any one of claims 1 to 9, the bogie (10) carrying the car.
